# EUROPEAN PATENT APPLICATION

(11) **EP 4 835 422 A2**
(43) Date of publication of application: **04.11.2026**
(21) Application number: 26175481.6
(22) Date of filing: 29.04.2026
(51) Int. Cl.: G01K 1/14

(54) **THERMALLY ISOLATED COMPLIANT TEMPERATURE SENSOR**

(30) Priority: 01.05.2025 US 202519196322
(71) Applicant: Amphenol Thermometrics, Inc., Saint Mary's, PA 15857 (US)
(72) Inventor: Schneider, Shane Timothy, Saint Marys, 15857 (US); Geer, David John, Johnsonburg, 15845 (US)
(74) Representative: Mewburn Ellis LLP

(57) **Abstract**

Provided herein are aspects and embodiments relating to temperature sensor assemblies which are thermally insulated and may be installed in a manner that is tolerant of misalignment. A temperature sensor assembly according to this disclosure may include a compliant, thermally insulating boot. Some embodiments provide for redundant temperature sensors and a thermally conductive shield with a plurality of segments. One application of this technology may be to monitor the temperature of a stator pin of an electric vehicle.

## Description

### BACKGROUND

### Technical Field

The apparatus and techniques described herein relate to sensing temperature, and in particular to a thermally isolated temperature sensor that is compliant to allow a connection to be made despite possible misalignment during installation.

### Discussion of the Related Art

Temperature sensors are used in a variety of applications. For example, in electric vehicles, a temperature sensor may measure the temperature of the vehicle motor that propels the vehicle using battery power. Sensing the temperature of the motor may allow overheating to be avoided.

### SUMMARY

In some aspects, the techniques described herein relate to a temperature sensor assembly, including: a thermally conductive shield; a temperature sensor within the thermally conductive shield; and a thermally insulating boot around the thermally conductive shield, wherein the thermally insulating boot is mechanically compliant, wherein the thermally conductive shield and/or the thermally insulating boot has at least one alignment structure that allows the temperature sensor assembly to be installed on a thermally conductive structure despite a misalignment between the temperature sensor assembly and the thermally conductive structure.

In some aspects, the techniques described herein relate to a temperature sensor assembly, wherein the thermally insulating boot includes a polymer.

In some aspects, the techniques described herein relate to a temperature sensor assembly, wherein the polymer includes an elastomer.

In some aspects, the techniques described herein relate to a temperature sensor assembly, wherein the thermally conductive shield includes a plurality of segments that are configured to compressively hold the temperature sensor assembly on the thermally conductive structure.

In some aspects, the techniques described herein relate to a temperature sensor assembly, wherein the temperature sensor is a first temperature sensor, and further including a second temperature sensor disposed in the thermally conductive shield.

In some aspects, the techniques described herein relate to a temperature sensor assembly, wherein the plurality of segments includes a first segment and a second segment, the first temperature sensor is disposed in the first segment, and the second temperature sensor is disposed in the second segment.

In some aspects, the techniques described herein relate to a temperature sensor assembly, wherein the thermally conductive shield further includes a bridge coupling the first segment and the second segment.

In some aspects, the techniques described herein relate to a temperature sensor assembly, wherein the thermally conductive shield has one or more alignment structures of the at least one alignment structure, and the one or more alignment structures includes one or more chamfered portions of the plurality of segments, the one or more chamfered portions being configured to guide the thermally conductive structure between the plurality of segments during installation of the temperature sensor assembly on the thermally conductive structure.

In some aspects, the techniques described herein relate to a temperature sensor assembly, wherein the thermally insulating boot has one or more second alignment structures of the at least one alignment structure, and the one or more second alignment structures includes at least one chamfered inner portion configured to guide the thermally conductive structure during installation of the temperature sensor assembly on the thermally conductive structure, wherein the one or more alignment structures is configured to correct misalignment in a first direction and the one or more second alignment structures is configured to correct misalignment is a second direction perpendicular to the first direction.

In some aspects, the techniques described herein relate to a temperature sensor assembly, wherein the thermally insulating boot has one or more alignment structures of the at least one alignment structure, and the one or more alignment structures includes at least one chamfered inner portion configured to guide the thermally conductive structure during installation of the temperature sensor assembly on the thermally conductive structure.

In some aspects, the techniques described herein relate to a system, including: a thermally conductive structure; and a temperature sensor assembly installed on the thermally conductive structure, the temperature sensor assembly including: a thermally conductive shield; a temperature sensor within the thermally conductive shield and configured to output a signal indicative of a temperature of the thermally conductive structure; and a boot around the thermally conductive shield, the boot being configured to thermally insulate the temperature sensor from a surrounding environment.

In some aspects, the techniques described herein relate to a method of monitoring a temperature of a thermally conductive structure disposed within an encasing structure occluding the thermally conductive structure, the method including: inserting a temperature sensor assembly into the encasing structure, wherein the temperature sensor assembly is aligned with the thermally conductive structure at least in part by a chamfer of the temperature sensor assembly.

In some aspects, the techniques described herein relate to a temperature sensor assembly configured to attach to a thermally conductive structure, the temperature sensor assembly including: a thermally conductive shield, including: a first segment; and a second segment; a first temperature sensor disposed within the first segment; a second temperature sensor disposed within the second segment; and a thermally insulating boot around the thermally conductive shield.

In some aspects, the techniques described herein relate to a temperature sensor assembly, wherein the thermally insulating boot is mechanically compliant.

In some aspects, the techniques described herein relate to a temperature sensor assembly, wherein the thermally insulating boot includes a polymer.

In some aspects, the techniques described herein relate to a temperature sensor assembly, wherein the polymer includes an elastomer.

In some aspects, the techniques described herein relate to a temperature sensor assembly, wherein the thermally insulating boot is configured to exert a force pressing the first and second segments together.

In some aspects, the techniques described herein relate to a temperature sensor assembly, wherein the first segment includes a first alignment structure and the second segment includes a second alignment structure, the first and second alignment structures being configured to press the thermally conductive structure between the first and second segments.

In some aspects, the techniques described herein relate to a temperature sensor assembly, wherein the thermally insulating boot includes at least one alignment structure to align the temperature sensor assembly with the thermally conductive structure.

In some aspects, the techniques described herein relate to a temperature sensor assembly, wherein the thermally conductive shield further includes a bridge joining the first segment and the second segment.

The foregoing summary is provided by way of illustration and is not intended to be limiting.

### BRIEF DESCRIPTION OF DRAWINGS

In the drawings, each identical or nearly identical component that is illustrated in various figures is represented by a like reference character. For purposes of clarity, not every component may be labeled in every drawing. The drawings are not necessarily drawn to scale, with emphasis instead being placed on illustrating various aspects of the techniques and devices described herein.
FIG. 1 is an illustration showing the challenges of installing a temperature sensor assembly in an area that cannot be easily viewed during installation.
FIG. 2A is a perspective view of a temperature sensor assembly that is tolerant of misalignments and allows for the temperature sensor to be thermally isolated from the environment, according to some embodiments.
FIG. 2B is a perspective view of the temperature sensor assembly of FIG. 2A without a boot to better illustrate the components within the boot.
FIG. 3 is an end-view of the temperature sensor assembly of FIG. 2A.
FIG. 4A is a perspective view of the temperature sensor assembly of FIG. 2A installed on a conductive structure with the boot shown as translucent.
FIG. 4B is a perspective view of the temperature sensor assembly of FIG. 2A installed on the conductive structure with the boot shown as opaque.
FIG. 5 is an end-view of an alternative mating connector interface for the temperature sensor assembly.

### DETAILED DESCRIPTION

The inventors have recognized and appreciated a need for temperature sensors which are both thermally insulated and installed in a manner that is tolerant of misalignment during installation.

Many electrical and/or mechanical systems are designed to operate within a certain range of temperatures. Overheating of such systems may lead to component degradation and/or system failure. In many circumstances, it is thus preferable to monitor the temperature of system components to enable action to cool the system components and/or prevent certain system behavior while overheated, for example.

Temperature sensors may be employed to collect data relating to temperature and thus enable measures to prevent damage if overheating is detected. For example, a temperature sensor may be connected to a component, such as a stator pin of an electric vehicle, to measure the temperature of an electric motor comprising the stator pin. In the automotive example, action taken responsive to temperature data may include limiting revolution speed of the electric motor, preventing vehicle operation, applying coolant, and/or providing instructions to a driver and/or mechanic, for example. Providing temperature sensors may thereby extend the lifetime and improve the functionality of systems such as electric vehicles.

However, installation of a temperature sensor may be challenging. In some systems it may be desirable to install a temperature sensor on a component which is at least partially occluded from view. In the automotive example, installing the temperature sensor on the stator pin of a motor may involve alignment through a hole in the motor case without good visibility to the location of the stator pin. Misalignment may prevent or impede successful installation. Accordingly, it would be advantageous for a temperature sensor assembly to be compliant such that it can be installed onto the component to be monitored, such as the stator pin in the automotive example, despite misalignment of the temperature sensor assembly with respect to the component.

Additionally, in some contexts, temperature sensors may provide readings which are unduly influenced by the temperature of the surrounding environment. If the surrounding environment is warmer or cooler than the component to be monitored and the temperature sensor is not thermally isolated from the surrounding environment, the temperature sensor may generate inaccurate temperature readings. In some embodiments, thermally isolating the temperature sensor from the surrounding environment can enable a more accurate temperature reading. In the automotive example discussed above, the temperature sensor assembly installed on a stator pin may be thermally isolated from the surrounding environment, for example the interior of a motor casing and/or the environment of the vehicle around the motor casing.

Accordingly, provided herein are aspects and embodiments relating to temperature sensor assemblies which may address one or more of these challenges. A temperature sensor assembly configured to be installed on a thermally conductive structure according to aspects of this technology may have a thermally insulating boot that is mechanically compliant. A thermally conductive shield, a thermally insulating boot, or both, may have at least one alignment structure, such as a chamfered surface, for example, that allows the temperature sensor assembly to be installed on a thermally conductive structure despite a misalignment between the temperature sensor assembly and the thermally conductive structure.

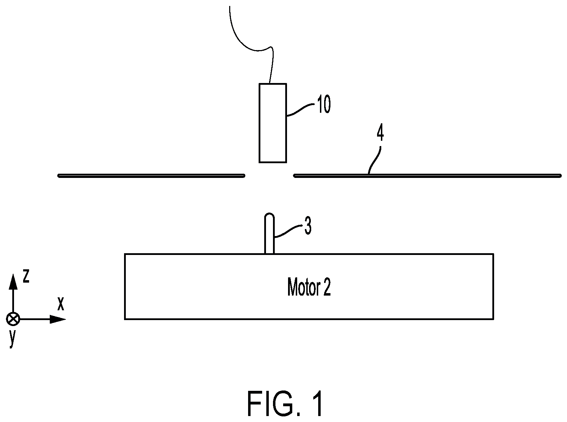

FIG. 1 is an illustration showing the challenges of installing a temperature sensor assembly 10 in an area that cannot be easily viewed during installation. In the example of FIG. 1, a temperature sensor assembly 10 is desired to be installed onto a thermally conductive structure 3 (e.g., a stator pin) of a motor 2 through an opening in the motor case 4. While not shown in the figure, the motor case 4 may be an encasing structure which surrounds the motor 2.

As shown, when the temperature sensor assembly 10 is positioned at the opening of the motor case 4 as shown, the thermally conductive structure 3 is not visible from the outside of the motor case 4 (from above the temperature sensor assembly 10 in FIG. 1). Thus, it may be difficult to align the temperature sensor assembly 10 with the thermally conductive structure 3 when attempting to press the temperature sensor assembly 10 onto the thermally conductive structure 3. Accordingly, it may be challenging and time-consuming to install the temperature sensor assembly 10 on the thermally conductive structure 3.

Although the example of FIG. 1 as well as examples of subsequent figures are often described in the context of installing a temperature sensor assembly 10 on a stator pin of a vehicle motor 2, this is an example. The techniques and apparatuses described herein may be used in any other suitable application, including those in which tolerance of misalignment of a temperature sensor assembly during installation would be advantageous.

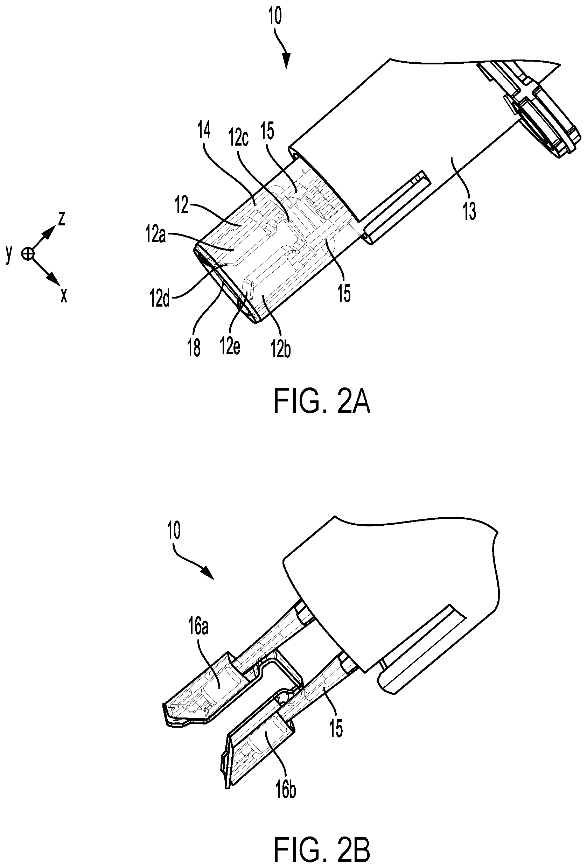

FIG. 2A is a perspective view of a temperature sensor assembly 10 that is tolerant of misalignments and allows for the temperature sensor to be thermally isolated from the environment, according to some embodiments. As shown, the temperature sensor assembly 10 includes a thermally conductive shield 12, a body 13, a thermally insulating boot 14, electrical conductors 15, and temperature sensors 16a and 16b within the thermally conductive shield 12 (see FIG. 2B).

The body 13 of the temperature sensor assembly 10 may provide a mechanical structure for supporting the temperature sensor assembly 10. In some embodiments, the body 13 may be formed of a glass-filled nylon material; however, this is an example, and the body 13 may be formed of any suitable material, such as another composite and/or polymer material. Suitable materials may be selected based on the application in which the temperature sensor assembly 10 is to be used, based on suitable criteria such as strength, cost, pliability and/or durability, for example.

The thermally conductive shield 12 may contain, or have disposed therein, temperature sensors 16a and 16b, as shown in FIG. 2B, and may be configured to attach to a thermally conductive structure 3, such as a stator pin, at which a temperature is to be measured by the temperature sensors 16a and 16b. The thermally conductive shield 12 may have two segments 12a and 12b, with an open space between the segments 12a and 12b configured to receive the thermally conductive structure 3. In some embodiments, the segments 12a and 12b of the thermally conductive shield 12 may be configured to compressively hold the temperature sensor assembly 10 on the thermally conductive structure 3. For example, the thermally conductive shield 12 may have a bridge 12c joining the segments 12a and 12b that produces a force in the inward direction of FIG. 2A along the x axis in response to a insertion of a thermally conductive element 3 that is wider along the x axis than the space between the segments 12a and 12b when the thermally conductive element 3 is not inserted therebetween.

The thermally conductive shield 12 may be configured such that heat transfers from/to the thermally conductive structure 3 through the thermally conductive shield 12 and to/from the temperature sensors 16a and 16b to bring the temperature at the temperature sensors 16a and/or 16b approximately to the temperature of the thermally conductive structure 3. Alternatively or additionally, the thermally conductive shield 12 may serve to protect the temperature sensors 16a and 16b from damage during installation of the temperature sensor assembly on the thermally conductive structure 3. For example, the thermally conductive shield 12 may deflect and/or absorb impact from the thermally conductive structure 3.

As mentioned above, in some embodiments, thermally conductive shield 12 may include a bridge 12c, as shown, which mechanically and thermally connects the segments 12a and 12b of the thermally conductive shield 12. When the temperature sensor assembly 10 is installed, the segments 12a and 12b of the thermally conductive shield 12 may be deflected outward by the thermally conductive structure 3, such that the thermally conductive structure 3 is pressed between the segments 12a and 12b of the thermally conductive shield 12. The bridge 12c may provide a "stop" that prevents over-insertion of the conductive structure 3. That is, when the thermally conductive structure 3 is inserted to a depth such that it reaches the bridge 12c, the bridge 12c may prevent thermally conductive structure 3 from being inserted to a greater degree. The bridge 12c may serve to transfer heat between the segments 12a and 12b of the thermally conductive shield 12 and/or from a region of the thermally conductive structure 3 abutting the bridge 12c, which may facilitate accurate temperature measurement.

The thermally conductive shield 12 may be formed of any suitable thermally conductive material. In some embodiments, the thermally conductive shield 12 may be formed of a metal (e.g., copper, gold, steel, silver, brass), a non-metal or a combination thereof. The thermally conductive shield 12 may be formed of a single material or of a plurality of materials.

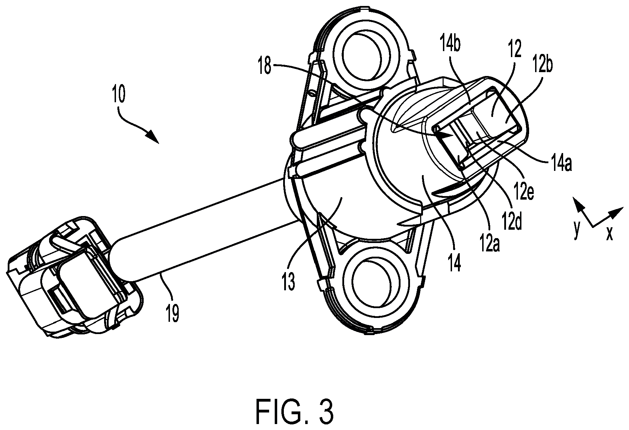

The mechanically compliant, thermally insulating boot 14 may surround the thermally conductive shield 12. The boot 14 may thus isolate the temperature sensors 16a and 16b from the environment surrounding the temperature sensor assembly 10, thereby allowing the temperature sensors 16a and 16b to obtain an accurate temperature measurement of the thermally conductive structure 3 to which the temperature sensor assembly 10 is attached. Alternatively or additionally, the boot 14 may protect the thermally conductive shield from contaminants (e.g., coolant, oil, water, and/or dust). The boot 14 may have an opening 18 (FIG. 2A, FIG. 3) on a side of the temperature sensor assembly 10 that allows for insertion and/or removal of the thermally conductive structure 3.

The boot 14 may be mechanically compliant to movement along the x and/or y axes, allowing the temperature sensor assembly 10 to flex during installation such that it can be pushed onto the thermally conductive structure 3 even in the event of misalignment in the x and/or y axes. Additionally, the boot 14 may exert an inward force along the x axis on the segments 12a and 12b of the thermally conductive shield, for example pressing the segments 12a and 12b together, which increases mechanical and/or thermal coupling between the thermally conductive shield 12 and the thermally conductive structure 3.

The boot 14 also may be mechanically compliant along the z axis, allowing the boot 14 to compress when the temperature sensor assembly 10 is pressed onto the thermally conductive structure 3. A mechanically compliant boot 14 may permit a seal (not shown) to be formed between the boot 14 and a structure underlying thermally conductive structure 3, which improves thermal insulation between the temperature sensors 16a and 16b and the surrounding environment. The boot 14 may apply a force against such a structure along the z axis, maintaining a strong seal.

The boot 14 may be formed of a material that can withstand the temperature of the environment in which the temperature sensor assembly 10 operates. In the case of a motor stator, the environmental temperature may be up to approximately 200 °C, but more typically 130 °C or 140 °C. However, the techniques described herein are not limited to particular temperatures or temperature ranges.

The boot 14 may be formed of any suitable material, such as a polymer. For example, the boot 14 may be formed of an elastomer. The boot 14 may be formed of any material or materials which are suitable to provide the desired compliance and durability at the expected operating temperature of the temperature sensor assembly 10. For example, the boot 14 may be formed of silicone, fluoroelastomer (FKM), ethylene acrylic elastomer (AEM), or hydrogenated nitrile butadiene rubber (HNBR). The boot 14 is shown as translucent in FIG. 2A to illustrate the components within the boot 14.

FIG. 2B is a perspective view of the temperature sensor assembly 10 without the boot 14 to better illustrate the components within the boot 14. In FIG. 2B, the thermally conductive shield 12 is shown as translucent to illustrate the temperature sensors 16a and 16b shown in respective segments 12a and 12b of the thermally conductive shield 12.

In some embodiments, the temperature sensors 16a and 16b may be secured in the thermally conductive shield 12 by a potting material (e.g., a thermosetting plastic, silicone rubber, or an epoxy). However, any suitable material and/or method may be used to secure the temperature sensors 16a and 16b in the thermally conductive shield 12. Suitable materials and/or methods may allow for good thermal coupling between the temperature sensors 16a and 16b and the thermally conductive shield 12.

The temperature sensors 16a and 16b may be positioned on interior sides of the respective segments 12a and 12b of the thermally conductive shield 12-for example, sides proximate the thermally conductive structure 3 when attached-to obtain good thermal contact with the thermally conductive structure 3. Accordingly, the temperature sensors 16a and 16b may output signals and/or data indicative of a temperature of the thermally conductive structure 3.

In some embodiments, the temperature sensors 16a and 16b are redundant (e.g., making essentially the same measurement), allowing a temperature measurement to be made in the event one temperature sensor fails. In other embodiments, the thermally conductive shield 12 only includes a single temperature sensor, which may have the advantage of lower cost. In general, the temperature sensor assembly 10 may have one temperature sensor, two temperature sensors, or three or more temperature sensors, as the present disclosure is not limited as to the number of temperature sensors.

The temperature sensors 16a and/or 16b may be any suitable types of temperature sensors, including but not limited to thermistors and/or thermocouples, for example. Suitable temperature sensors may be selected based on expected range of temperatures to measure, current draw of the temperature sensors, form factor of the temperature sensor, cost of the temperature sensor, data format output by the temperature sensor, and so forth. Any type of temperature sensor measurement may be made, such as an absolute temperature sensor measurement, a relative temperature sensor measurement, or a differential temperature sensor measurement, for example.

Electrical conductors 15-which may, for example, be wires-are connected to the temperature sensor(s) (e.g., temperature sensors 16a and 16b) and may provide signals from the temperature sensors 16a and 16b representing sensed temperature to circuitry external to the temperature sensor assembly 10. Such external circuitry may evaluate the sensed temperature, perform signal processing based on the sensed temperature and/or take action based on the sensed temperature. The evaluation of the sensed temperature may include comparing the sensed temperature to a threshold, for example. Examples of actions taken may include storing the temperature, limiting operation of the motor or other system components at high temperature, displaying a warning to a user of the system, or otherwise processing or displaying the measured temperature. The electrical conductors 15 may have any material or construction suitable for transmitting signal from the temperature sensors 16a and 16b to the external circuitry.

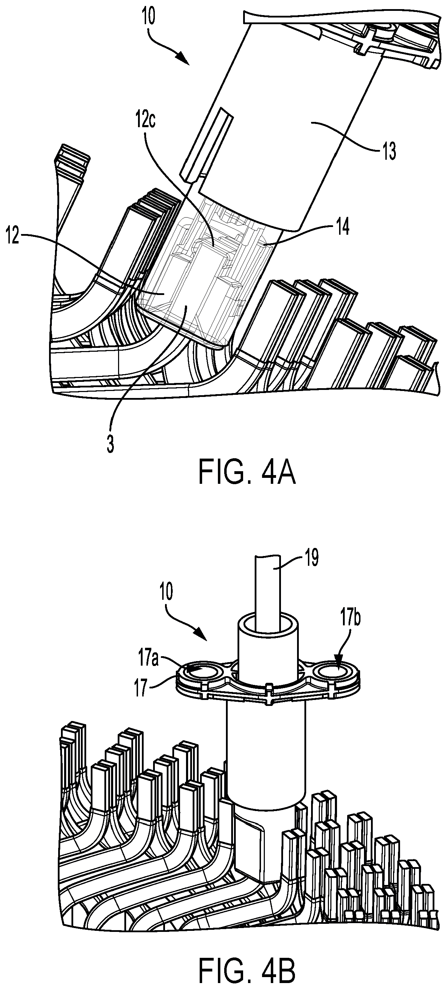

FIG. 3 is an end-view of the temperature sensor assembly 10. As shown in FIG. 3, and as also shown in FIGS. 2A and 2B, the two segments 12a and 12b of the thermally conductive shield 12 may include one or more alignment structures. For example, the segments 12a and 12b may have portions (e.g., ends 12d and 12e) that are chamfered, or angled. The chamfered ends 12d and 12e may be configured such that pushing the thermally conductive shield 12 onto the thermally conductive structure 3 guides the temperature sensor assembly 10 such that the thermally conductive shield 12 is centered on, and pushes onto, the thermally conductive structure 3 (see FIG. 4A). The chamfered ends 12d and 12e of the thermally conductive shield 12 segments 12a and 12b thereby help at least in part to align, or correct misalignment of, the temperature sensor assembly 10 along the x axis.

FIG. 3 also shows that the boot 14 may include one or more alignment structures. For example, inner surface portions 14a and 14b of the boot 14 extending along the x axis may be chamfered along the y axis to align, or correct misalignment of, the temperature sensor assembly 10 along the y axis. That is, the chamfered inside portions 14a and 14b of the boot 14 may serve at least in part to correct misalignment in a direction perpendicular to a direction in which the chamfered ends 12d and 12e of the thermally conductive shield 12 correct misalignment.

The chamfered ends 12d and 12e of the thermally conductive shield 12 and the chamfered inside portions 14a and 14b of the boot 14 may function in cooperation with one another to align, or correct misalignment of, the temperature sensor assembly 10 along a direction which has components along both the x and y axes.

While the thermally conductive shield 12 and the boot 14 are shown with chamfers of certain angles, the angles of the chamfer may be any suitable angle for causing alignment, or correcting misalignment, in the way described. The angles of the chamfered ends 12d and 12e of the thermally conductive shield 12 may be the same as or different from the angles of the chamfered inner portions 14a and 14b of the boot 14. In some embodiments, the angles of the chamfers may be constant across the chamfers. In some embodiments, the angles of the chamfers may change across the chamfers such that one region of a chamfer is more "steep" than another region of the same chamfer; the chamfer may thus be curved. In some embodiments, when measured from the x-y plane, the angles of the chamfers may be between 15 and 75 degrees and/or between 30 and 60 degrees. However, the chamfers are not limited to having particular angles.

The dimensions of the chamfer, as well as the dimensions of other components of the temperature sensor assembly 10, may be selected based on the dimensions of the thermally conductive structure 3 to be measured, the environment in which the temperature sensor assembly 10 is to be installed, the degree of alignment guidance desired and/or the degree of thermal insulation desired, for example.

FIG. 4A is a perspective view of the temperature sensor assembly 10 installed on the conductive structure 3, which in this example is a stator pin. The view of FIG. 4A is shown with the boot 14 being transparent to show the components within. When installed, the conductive structure 3 may press against the bridge 12c extending between the two segments 12a and 12b of the thermally conductive shield 12, as described above.

FIG. 4B is a perspective view of the installed temperature sensor assembly 10 with the boot shown as opaque. As described above, the temperature sensor assembly 10 and the thermally conductive structure 3 may be entirely or partially enveloped by an encasing structure-in the automotive example, a motor casing. This encasing structure may, for example, occlude the view of the thermally conductive structure 3 in the orientation in which the temperature sensor assembly 10 is to be installed. Accordingly, installing the temperature sensor assembly 10 may include inserting the temperature sensor assembly 10 into the encasing structure while the thermally conductive structure 3 is occluded by the temperature sensor assembly 10 and/or the encasing structure 4.

Further, post-installation, the encasing structure may increase the difficulty of replacing an installed temperature sensor. The inventors have recognized and appreciated that temperature sensor assemblies as provided herein may mitigate this difficulty by their modular nature, ease of installation, and possibility for redundant temperature sensors 16a and 16b. Alternatively or additionally, temperature sensor assemblies as provided herein may include a handling member 17 extending from the body 13 which facilitates removal by providing an easily handled region on which a user may pull to remove the temperature sensor assembly 10. The handling member 17 may include two eyes 17a and 17b, in some embodiments.

As shown for example in FIGs. 3 and 4B, the temperature sensor assembly 10 utilizes a flying lead style connection 19 which may serve as a mating connector interface to couple the temperature sensor assembly 10 to external circuitry as described above. This connection 19 may include and/or be electrically connected to the electrical conductors 15.

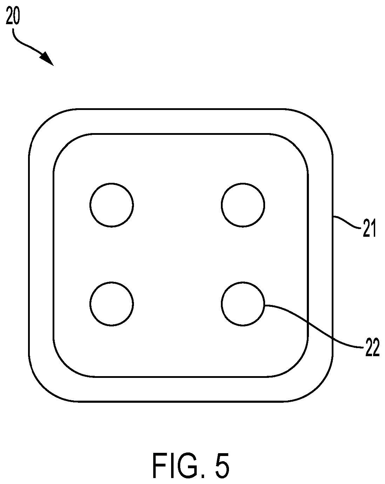

FIG. 5 is an end-view of an alternative mating connector interface 20 for the temperature sensor assembly 10. As shown, the alternative mating connector may include a connector housing 21 having conductive contacts 22. The connector housing 21 may be integrated with the body 13 of the temperature sensor assembly 10. The conductive contacts 22 may be electrically connected to the electrical conductors 15. The conductive contacts 22 may include pins configured to couple with corresponding sockets of external circuitry. Alternatively, or additionally, the conductive contacts 22 may include sockets configured to couple with corresponding sockets of external circuitry.

While one example of a flying lead connection 19 and one alternative mating connector interface 20 have been shown and described, aspects of the technology disclosed herein are not limited to these embodiments. Any suitable structures and/or techniques may be used to establish a connection between the temperature sensor assembly 10 and external circuitry.

In some embodiments, components described herein to be thermally conductive may have a thermal conductivity of greater than 50 Watts per meter Kelvin (W/m K), greater than 100 W/m K, greater than 200 W/m K, greater than 300 W/m K, greater than 400 W/m K, and/or greater than 2000 W/m K. Components described herein to be thermally insulative may have a thermal conductivity of less than 0.1 W/m K, less than 1 W/m K, less than 5 W/m K, less than 10 W/m K, and/or less than 25 W/m K. However, these are examples and the thermal conductivities of the materials described herein are not limited in this respect.

Various aspects of the apparatus and techniques described herein may be used alone, in combination, or in a variety of arrangements not specifically discussed in the embodiments described in the foregoing description and is therefore not limited in its application to the details and arrangement of components set forth in the foregoing description or illustrated in the drawings. For example, aspects described in one embodiment may be combined in any manner with aspects described in other embodiments.

Use of ordinal terms such as "first," "second," "third," and so forth in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The terms "substantially," "approximately," "about" and the like refer to a parameter being within 10%, optionally less than 5% of its stated value.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A temperature sensor assembly, comprising:
a thermally conductive shield;
a temperature sensor within the thermally conductive shield; and
a thermally insulating boot around the thermally conductive shield, wherein the thermally insulating boot is mechanically compliant,
wherein the thermally conductive shield and/or the thermally insulating boot has at least one alignment structure that allows the temperature sensor assembly to be installed on a thermally conductive structure despite a misalignment between the temperature sensor assembly and the thermally conductive structure.

2. The temperature sensor assembly of claim 1, wherein the thermally insulating boot comprises a polymer.

3. The temperature sensor assembly of claim 2, wherein the polymer comprises an elastomer.

4. The temperature sensor assembly of any preceding claim, wherein the thermally conductive shield comprises a plurality of segments that are configured to compressively hold the temperature sensor assembly on the thermally conductive structure.

5. The temperature sensor assembly of claim 4, wherein the temperature sensor is a first temperature sensor, and further comprising a second temperature sensor disposed in the thermally conductive shield.

6. The temperature sensor assembly of claim 5, wherein the plurality of segments comprises a first segment and a second segment, the first temperature sensor is disposed in the first segment, and the second temperature sensor is disposed in the second segment.

7. The temperature sensor assembly of claim 6, wherein the thermally conductive shield further comprises a bridge coupling the first segment and the second segment.

8. The temperature sensor assembly of any of claims 4-7, wherein the thermally conductive shield has one or more alignment structures of the at least one alignment structure, and the one or more alignment structures comprises one or more chamfered portions of the plurality of segments, the one or more chamfered portions being configured to guide the thermally conductive structure between the plurality of segments during installation of the temperature sensor assembly on the thermally conductive structure.

9. The temperature sensor assembly of claim 8,
wherein the thermally insulating boot has one or more second alignment structures of the at least one alignment structure, and the one or more second alignment structures comprises at least one chamfered inner portion configured to guide the thermally conductive structure during installation of the temperature sensor assembly on the thermally conductive structure,
wherein the one or more alignment structures is configured to correct misalignment in a first direction and the one or more second alignment structures is configured to correct misalignment is a second direction perpendicular to the first direction.

10. The temperature sensor assembly of any of claims 1-7, wherein the thermally insulating boot has one or more alignment structures of the at least one alignment structure, and the one or more alignment structures comprises at least one chamfered inner portion configured to guide the thermally conductive structure during installation of the temperature sensor assembly on the thermally conductive structure.

11. A system, comprising:
a thermally conductive structure; and
a temperature sensor assembly installed on the thermally conductive structure, the temperature sensor assembly comprising:
a thermally conductive shield;
a temperature sensor within the thermally conductive shield and configured to output a signal indicative of a temperature of the thermally conductive structure; and
a boot around the thermally conductive shield, the boot being configured to thermally insulate the temperature sensor from a surrounding environment.

12. A method of monitoring a temperature of a thermally conductive structure disposed within an encasing structure occluding the thermally conductive structure, the method comprising:
inserting a temperature sensor assembly into the encasing structure, wherein the temperature sensor assembly is aligned with the thermally conductive structure at least in part by a chamfer of the temperature sensor assembly.

13. A temperature sensor assembly configured to attach to a thermally conductive structure, the temperature sensor assembly comprising:
a thermally conductive shield, comprising:
a first segment; and
a second segment;
a first temperature sensor disposed within the first segment;
a second temperature sensor disposed within the second segment; and
a thermally insulating boot around the thermally conductive shield.

14. The temperature sensor assembly of claim 13, wherein the thermally insulating boot is configured to exert a force pressing the first and second segments together.

15. The temperature sensor assembly of any of claims 13-14, wherein the first segment comprises a first alignment structure and the second segment comprises a second alignment structure, the first and second alignment structures being configured to press the thermally conductive structure between the first and second segments.
